# EUROPEAN PATENT SPECIFICATION

(11) **EP 1 164 325 B1**
(45) Date of publication and mention of the grant of the patent: **26.10.2005**
(21) Application number: 01305156.0
(22) Date of filing: 13.06.2001
(51) Int. Cl.: F16L 21/08, F16L 37/092, F16L 21/04

(54) **Pipe coupling**
Rohrkupplung
Raccord de tuyaux

(30) Priority: 13.06.2000 GB 0014347
(43) Date of publication of application: 19.12.2001
(73) Proprietor: GLYNWED PIPE SYSTEMS LIMITED, Sheldon, Birmingham B26 3AZ (GB)
(72) Inventor: Rex, Brian, Hitchin, Hertfordshire SG5 2HH (GB); Beevor, Mark Adrian, Letchworth. Hertfordshire SG6 2DT (GB)
(74) Representative: Hutchins, Michael Richard

(56) References cited:
- EP-A- 0 565 820
- EP-A- 0 794 378
- WO-A-00/03171
- DE-A- 2 754 984
- GB-A- 2 272 248
- US-A- 4 330 143
- US-A- 5 645 285
- PATENT ABSTRACTS OF JAPAN vol. 1998, no. 04, 31 March 1998 (1998-03-31) & JP 09 317961 A (YOKOHAMA RUBBER CO LTD:THE), 12 December 1997 (1997-12-12)

## Description

The present invention relates to a device for coupling to a pipe. In particular, the invention relates to a pipe coupling device which grips and seals pipes with a range of outer diameters.

The expression "pipe" as used herein is intended to include pipes and tubes as such, and also pipe-like members and fittings for use in pipework such as bends, elbows, "T" connectors, flange adaptors and parts and devices adapted to be fitted to pipework such as valves and pumps. Such pipes may have a variety of end configurations, and will be plain-ended in contrast to flange-ended.

Pipe coupling devices commonly comprise an annular coupling sleeve that can connect with a plain-ended pipe. The connection can be made via a sealing or gripping member such as a sealing gasket arranged about the plain-ended pipe, and an annular compression member disposed about the end of the sleeve and arranged to be drawn axially against the sealing or gripping member to cause the said member to be forced radially inwardly into sealing contact between the sleeve member and the outer periphery of the plain-ended pipe located within the sleeve. The sleeve and/or the annular compression member are typically provided with radially inclined annular surfaces to assist deformation of the sealing or gripping member in a radially inwards direction.

Such pipe couplings can be formed, for example, of malleable iron, steel or plastics material, the gaskets being formed of an appropriate elastomeric material.

The compression member can be in the form of a compression flange the compression flange being provided with tightening nuts and bolts for connecting together the compression flange with a flange or similar formation on, or associated with, the coupling sleeve. The tightening bolts pass through apertures spaced around the outer extremities of the respective flanges, such bolts being provided with a head at one end and carrying a nut at the other so that the flanges are drawn together by tightening the nuts and bolts. Alternatively, the compression member may be threaded to enable it to screw into or onto the ends of the sleeve.

One problem confronting manufacturers of pipe couplings is that for pipes having a given nominal outside diameter (O.D.), the pipes in practice may have O.D.s varying over quite a wide range. Thus, couplings need to be capable of being used to connect pipes having a range of O.D.s.

In many known coupling devices, the annular compression member (e.g. compression flange), and the opposing portion of the sleeve against which the sealing or gripping member (e.g. sealing gasket) is compressed, have inclined compression surfaces, the angles of inclination serving to assist the gasket to be deformed radially inwardly.

In such coupling devices, the sealing or gripping efficiency of the gasket, and/or any gripping element associated therewith, is dependent on the input loads exerted as the two inclined compression surfaces of the sleeve and compression member are drawn towards each other, and by the angle that at least one of the inclined compression surfaces makes with the pipe.

On pipe couplings manufactured for pipes of set dimensions, i.e. pipes manufactured to very close tolerances with little variation in O.D., the inclined compression surface(s) usually has a *shallow* taper or angle. When the axial load is applied by drawing two inclined compression surfaces together, which in most cases comprises tightening a nut and bolt connecting a pair of flanges extending radially outwardly from the inclined surfaces, either side of a gripping or sealing ring, the shallow taper helps to improve the gripping force.

However, when such a shallow angle is used on pipe couplers intended for use on a *wide range* of pipe diameters, a much greater range of axial movement may be required to produce the necessary radial inward movement of the gasket and, for example, the bolt length needed to impart pressure to and reduce the diameter of a sealing or gripping gasket by, e.g. 35mm, is considerable.

To overcome this problem, the taper of the compression surface can be *steepened,* but a drawback here is the initial requirement for a much greater force to be imparted by the bolt to create an efficient grip; moreover, the gripping force is not significantly further enhanced by the angle.

One known coupling device intended for use with a wide range of pipe O.D.s is disclosed in EP-A-0 794 378. In EP-A-0 794 378, there is disclosed a device comprising a sleeve for receiving an end of a pipe, an annular compression flange and, disposed axially therebetween, a sealing/gripping member which includes an annular gripping assembly comprising a plurality of slidably abutting elements. The slidably abutting elements are compressed between opposed inclined compression surfaces on the sleeve and the compression flange as the compression flange and sleeve are moved axially towards each other, thereby urging the gripping elements radially inwardly against the pipe.

A development of the device shown of EP-A-0 794 378 is disclosed in EP-A-0 974 780. In EP-A-0 974 780, the gripping action is provided by a separate gripping ring held within a recess on the radially inner surface of the slidably abutting elements. The gripping ring, which would appear not to be axially moveable with respect to the slidably abutting elements, is described as being formed from spring steel and having gripping teeth pressed out of the plane of the ring.

A problem with the devices of EP-A-0 974 378 and EP-A-0 974 780 is that in both cases the inclined compression surfaces on the sleeve and compression flange are relatively steep and hence the device suffers from the problems described above.

It is an object of the present invention to overcome the problems described above and provide a pipe coupling device capable of use with a wide range of O.D.s.

Accordingly, in one aspect the invention provides a pipe coupling device comprising:
an annular sleeve having an end configured to receive therein a plain end of a pipe and being provided with an annular first compression surface;
an annular compression member having an annular second compression surface;
an annular gripping means; and
means for drawing the annular compression member and the annular sleeve axially together so as to compress the gripping means between the first and second compression surfaces so as to deform or move the gripping means radially inwardly and into gripping engagement with the pipe;
characterised in that:
the annular gripping means comprises a radially outer element comprising an array of circumferentially discontinuous interlinked members, the radially outer element being configured to contract radially in response to a radially and/or axially compressive force, a radially inner element received within an annular recess in the radially outer element , annular sealing means interlocking with the radially outer gripping element and disposed between a first surface of the radially outer element and the first annular compression surface and, in use, between a second surface of the radially outer element and a radially outer surface of a pipe end received in the sleeve; the radially inner element and a gripping surface of the radially inner element being arranged for relative axial movement; the radially inner element and radially outer element being configured such that in response to axial outwards movement of the pipe, the gripping surface of the radially inner element is moved radially inwardly and into tighter gripping contact with the pipe.

As used herein, the term "annular" can relate to an integral unitary member or a member comprising a plurality of elements. For example, the annular gripping means can take the form of a multi-segment ring-like arrangement around the circumference of a pipe.

Preferably, the radially inner element and recess are configured such that in response to a radially inwards component of the movement of the radially outer element as it is compressed, the radially inner element is deformed or moved radially inwardly and into sealing and/or gripping contact with the pipe.

Preferably, the annular gripping means further comprises a compressible sealing gasket. Typically, at least a portion of the sealing gasket is sited between the pipe and the radially outer element. The sealing gasket may be made from an elastomeric material, for example a natural or synthetic rubber or other elastomer such as EPDM rubber, and may be annular in configuration. Thus, in response to the axial and/or radial component of the movement of the annular gripping means, the compressible sealing gasket may be deformed into sealing contact with the pipe.

The gripping surface of the radially inner element and the radially outer element are arranged for relative axial movement; the radially inner element and annular recess being configured such that in response to axial outwards movement of the pipe, the gripping surface of the radially inner element is moved radially inwardly and into tighter gripping contact with the pipe. Thus the gripping surface of the radially inner element is arranged to grip the pipe more tightly in response to forces acting to retract the pipe from the coupling sleeve. In this way, the coupling of the invention is able to resist end loads and can prevent the pipe from being pulled out of the coupling.

The mechanism by which the gripping surface is urged radially inwardly against the pipe as a retractive end load is applied to the pipe can vary. For example, the radially inner element can take the form of a grab ring, e.g. a frustoconical grab ring, a radially outer edge of the grab ring being held against movement by the configuration of the recess in the radially outer element and a radially inner edge being pivotable about the outer edge such that it digs further in to the pipe as the pipe is subjected to retractive forces. However, it is preferred that the recess in the radially outer element is configured to provide an annular camming surface that cams against a radially outer surface of the radially inner element to urge the radially inner element radially inwardly against the pipe. In a currently most preferred embodiment, the radially inner element is substantially wedge-shaped and the annular recess presents a ramped surface that cams along a radially outer inclined surface of the wedge shape of the radially inner element to force the radially inner element radially inwardly against the pipe.

The radially inner element is typically formed from a plastics material, although it can be formed from other materials such as metals. The gripping surface is preferably provided with serrations, ridges or other grip-enhancing protrusions. In order to further enhance the effectiveness of the grip exerted on the pipe, the gripping surface is preferably provided with grip-enhancing means having a greater hardness than the hardness of the main body of the radially inner element itself. For example, the gripping surface can have disposed therein or thereon one or more metallic gripping studs or protrusions, or can have embedded in the surface thereof, or coated thereon an abrasive material, for example an abrasive material having a Mohs scale hardness of greater than 9.0, preferably a material such as carborundum (silicon carbide) having a Mohs scale hardness of at least about 9.5.

The grip-enhancing means can be moulded into the radially inner element during manufacture, or they can be secured in or to the gripping surface after manufacture. For example, they can be adhesively bonded to the gripping surface.

The radially inner element can be of annular or part annular configuration and may be arranged continuously or discontinuously about the pipe. For example, the may comprise a plurality, e.g. two, three, four, five or six members arranged circumferentially around the pipe. The radially inner element can be segmented, and may be arranged so that each segment cooperates with one of a plurality of linked elements making up the radially outer element carrier. The segments are typically hingedly linked to enable the radially inner element to conform to the radius of the pipe.

In one embodiment, the radially inner element may take the form of an annular gripping ring, the gripping ring having a radially inner edge for gripping the pipe and a radially outer edge for engaging a wall of the annular recess; the arrangement being such that upon application of a retractive end load on the pipe and consequent relative axial movement between the radially outer element and the radially inner element, the radially inner edge of the gripping ring engages the pipe and further axial movement of the inner edge is substantially arrested, and the radially outer edge moves axially such that the gripping ring pivots about the radially inner edge and is forced onto tighter gripping arrangement with the pipe.

Thus, in this embodiment, the gripping effect ofthe radially inner element arises through a levering action.

In another embodiment, the radially inner element may take the form of an annular wedge, the annular wedge having a radially inner surface for gripping the pipe and an inclined radially outer surface for engaging a portion of the wall of the annular recess; the arrangement being such that upon application of a retractive end load on the pipe and consequent relative axial movement between the radially outer element and the radially inner element, the radially inner surface of the annular wedge engages the pipe and further axial movement of the inner surface is substantially arrested as the radially outer element wedges the radially inner surface of the annular wedge into tighter gripping arrangement with the pipe.

Thus in this embodiment, the gripping effect ofthe radially inner element arises through a wedge action.

The radially outer surface of the annular wedge typically has an angle of inclination of less than 45° with respect to the axis of the pipe coupling device. More preferably the angle of inclination is less than 30°, for example less than 25°, and in particular is less than 20°.

The portion of the wall of the annular recess which engages the radially outer surface of the annular wedge is typically also inclined, although it need not be. Where it is inclined, it can have an angle of inclination complementary to the angle of inclination ofthe annular wedge. Alternatively, it can have an edge or other protrusion which rides along the inclined surface of the annular wedge in the manner of a cam follower.

In a further alternative, the wall of the annular recess can be inclined as aforesaid, and the radially outer surface of the annular wedge can be shaped so as to present an edge or other protrusion which can ride along the inclined surface of the annular recess in the manner of a cam follower. It will be appreciated therefore that the term "wedge" as used herein does not necessarily require that the radially inner element is wedge-shaped, provided of course that the interaction between the surface of the annular recess and the annular "wedge" does give rise to a wedging action in which the radially inner element is urged against and into gripping contact with the pipe.

In a yet further embodiment, the radially inner element may take the form of an annular cam, either the surface of the annular recess being shaped to form a cam follower and the radially inner element being shaped to form a cam, or *vice versa.* For example, the annular cam can have a radially convex inner surface for gripping the pipe and a radially concave outer surface for engaging a wall of the annular recess, the annular cam decreasing in cross-section in a direction towards the axially outer edge of the radially outer element; a portion of a surface of the annular recess constituting a cam follower, such that relative axial movement of the radially inner element with respect to the radially outer element causes the cam follower portion to cam along the concave outer surface of the annular cam thereby rotating the annular cam and urging the convex inner surface thereof into gripping engagement with the pipe.

Thus, in this embodiment, the gripping effect of the radially inner element arises through a camming action. Alternatively, the annular cam may be seen as constituting an arcuate wedge.

In a particular embodiment, the cam follower portion of the annular recess can take the form of a bulbous or inwardly concave surface.

In still another embodiment, the radially inner element may take the form of an annular roller, the arrangement being such that upon relative axial movement of the radially inner element with respect to the radially outer element, a radially outer surface of the annular roller engages a surface of the annular recess and is deformed radially inwardly and into gripping/sealing contact with the pipe.

In order to assist radially inward movement of the gripping means, typically one or both (and preferably both) of the first and second compression surfaces are inclined. Typically also, one or both (and preferably both) axial ends of the radially outer element of the annular gripping means are inclined, for example, at an angle or angles corresponding to the angle(s) of inclination of the compression surfaces.

Typically, the annular recess of the radially outer element has a radially inclined surface, the angle of inclination of which, with respect to the pipe axis, is less than the smallest angle of inclination of the first or second compression surfaces or the angle(s) of inclination of the axial end or ends of the radially outer element of the gripping means.

Typically, the radially inner element includes grip enhancing means for enhancing the gripping contact with the pipe. The grip enhancing means may take the form of a rough surface on the radially inner surface of the radially inner element, for example, the grip enhancing means may take the form of gripping teeth.

The grip enhancing means of the radially inner element may encompass the whole of, or part of, the circumferential surface of the pipe.

In one preferred embodiment, the radially outer element comprises an annular array of circumferentially discontinuous slidably abutting members, for example of the type disclosed in EP-A-0794378, but differing therefrom in respect of the annular recess and radially inner element.

The means for drawing the annular compression member and the annular sleeve axially together so as to compress the gripping means between the first and second compression surfaces can take the form of a threaded collar or insert which screws onto or into the axial end of the sleeve, but more typically, the annular compression member takes the form of a compression flange. The compression flange typically has a plurality of tightening bolts passing through apertures therein, and through apertures in an opposing flange on the annular sleeve.

In a further aspect, the invention provides a combination of a pipe coupling device as defined hereinabove and a pipe.

In still a further aspect, the invention provides a method for coupling the end of a pipe to a pipe coupling device, comprising the steps of:-
(a) placing an annular sleeve of a pipe coupling device as defined hereinabove over the end of a pipe;
(b) drawing the annular compression member and the annular sleeve axially together so as to compress the gripping means between the first and second compression surfaces so as to deform or move the gripping means radially inwardly and into gripping engagement with the pipe.

In yet a further aspect, the invention provides an annular gripping means for use with a pipe coupling device characterised in that it comprises a radially outer element and a radially inner element as hereinabove defined.

The invention will now be illustrated, but not limited, by reference to the following diagrammatic drawings, in which:-
Figure 1 is an axial view of an assembly of segments forming a radially outer gripping element;
Figure 2 is a longitudinal sectional elevation of a pipe coupling device according to one embodiment of the invention;
Figure 3 is a longitudinal sectional elevation of a pipe coupling device according to a second embodiment of the invention;
Figure 4 is a longitudinal sectional elevation of a pipe coupling device according to a third embodiment of the invention; and,
Figure 5 is a longitudinal sectional elevation of a pipe coupling device according to a fourth embodiment of the invention.

Referring now to the drawings, a pipe coupling device 2 according to one embodiment of the present invention includes a generally cylindrical sleeve 4, which in this embodiment has been cast from ductile iron, although it could alternatively be fabricated from steel, for example by forming cylindrical blank from a blank strip and then deforming the cylindrical blank to the desired shape.

At one end, the sleeve 4 is provided with a flared mouth defining an inclined annular first compression surface 6. An annular gripping means 8 is disposed axially between the first compression surface 6 and a second compression surface 10 of an annular compression flange 12. The annular gripping means 8 includes a radially outer element 14 and a radially inner element 16 received within an annular recess 18 within the radially outer element 14, and an elastomeric sealing gasket 20.

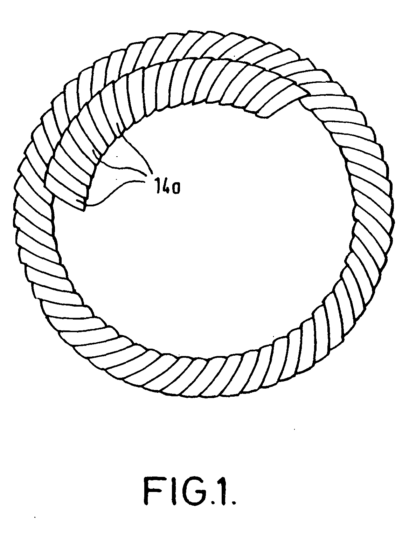

The radially outer element 14 is constituted by an annular array of circumferentially discontinuous slidably abutting gripping members 14a (see Figure 1) of the type generally disclosed in EP-A-0 794 378 and EP-A-0 974 780. Each gripping member, viewed along an axial line is generally wedge shaped, being thicker at its radially outermost extremity 14 than at its radially inner edge 14. When viewed along a circumferential line extending around the pipe, the gripping members can be seen to taper in a radially outwards direction.

Each gripping member 14a has a recess 18 in its radially inner edge, the recesses of all the gripping members together constituting an annular recess which has disposed therein a radially inner element 16. The geometry of the annular recess 18 and the radially inner element 16 can vary according to the nature of the gripping mechanism selected, as described below in more detail.

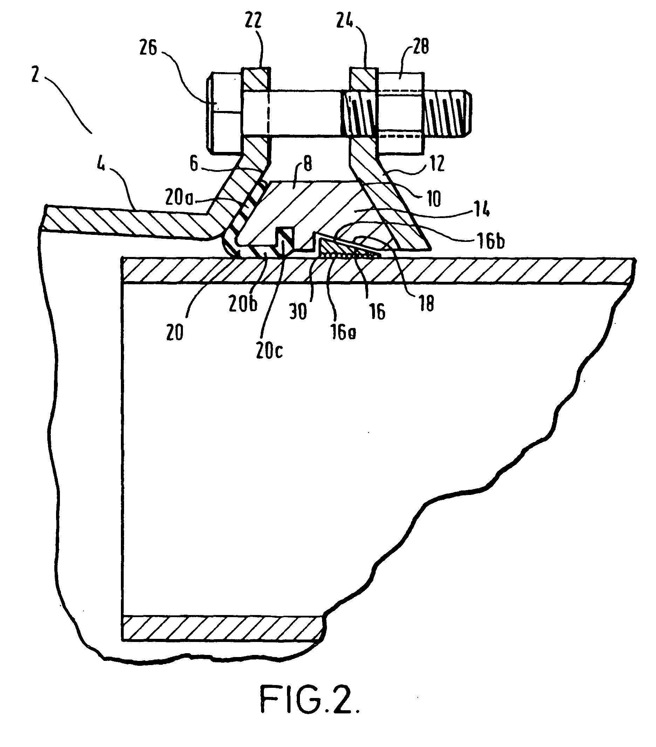

In Figure 2, the radially inner element 16 takes the form of an annular wedge, the annular wedge having a radially inner surface 16a for gripping the pipe and a radially outer surface 16b for engaging a wall of the annular recess. The second compression surface 10, of the annular compression member 12, subtends an angle A (where A is e.g. 45°) with the pipe. The annular recess 18 in the radial outer element 14 of the annular gripping means subtends an angle A' (where A' is e.g. 15°) with the pipe. The arrangement is such that upon relative axial movement between the radially outer element 14 and the annular wedge, the inclined surface of the annular recess 18 rides along radially outer surface 16b of the annular wedge 16 forcing the annular wedge radially inwardly and into contact with the pipe. As surface 16a of the annular wedge bites into and engages the pipe wall, further axial movement ofthe inner element is substantially arrested. Further movement of the outer element therefore wedges the radially inner surface 16a of the annular wedge into increasingly tighter gripping arrangement with the pipe.

In this way, the application of retractive end loads on the pipe which might otherwise tend to pull the pipe out of the coupling can be resisted since the movement of the wedge as the pipe is pulled leads to the gripping surface of the wedge biting deeper into the pipe to prevent further movement.

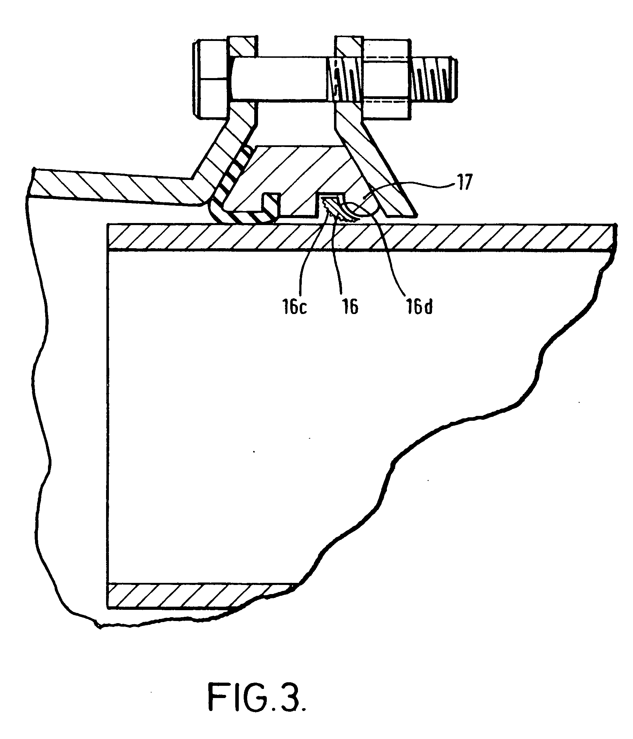

In figure 3, the radially inner element 16 takes the form of an annular cam, the annular cam having a radially convex inner surface 16c for gripping the pipe and a radially concave outer surface 16d for engaging a bulbous portion 17 of the wall of the annular recess. Bulbous portion 17 functions as a cam follower. As can be seen, the annular cam decreases in cross-section towards the outer edge of the radially outer element. The arrangement is such that as the compression flange and sleeve are drawn axially together, axial movement of radially inner element causes the cam follower portion 17 to cam along the concave outer surface 16d thereby rotating the annular cam and forcing the radially inner gripping surface 16c into gripping engagement with the pipe.

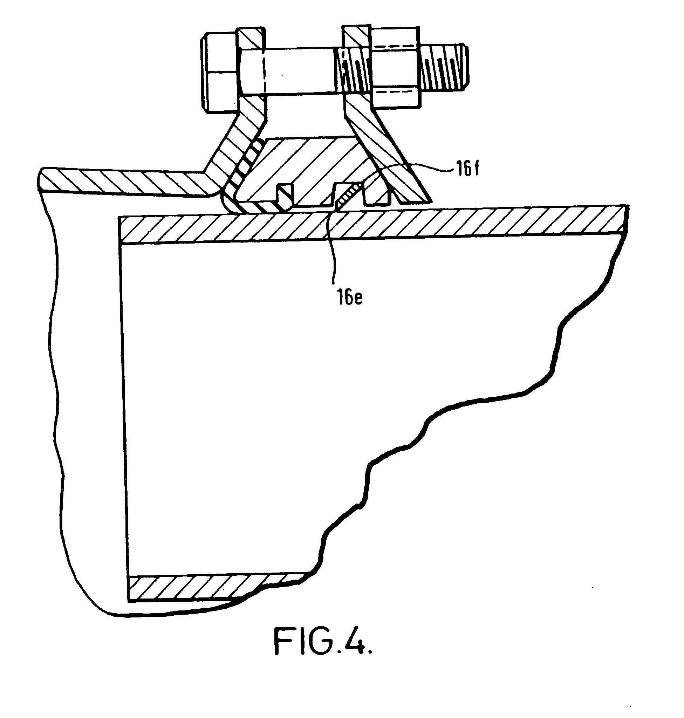

In the embodiment of Figure 4, the radially inner element 14 takes the form of an annular gripping ring of generally frustoconical form. The gripping ring has a radially inner edge 16e for gripping the pipe and a radially outer edge 16f for engaging a wall of the annular recess. The gripping ring can be formed from, for example a spring steel. In this embodiment, the annular recess is generally rectangular in cross section although the axially inner wall is slightly inclined. The arrangement of the recess and the gripping ring are such that as the radially outer element 14 is compressed between the sleeve and compression flange thereby moving the outer element in an axial (as well as radial) direction, the radially inner edge 16e of the gripping ring bites into the wall of the pipe and further axial movement of the inner edge is thereby arrested. However, the radially outer edge 16f continues to be urged in an axial direction by the wall of the annular recess and this has the effect of pivoting outer edge 16f about the radially inner edge 16e thereby forcing the inner edge 16e into still tighter gripping engagement with the pipe. It will be appreciated that in this embodiment, the gripping effect of the radially inner element can be seen as involving a levering action.

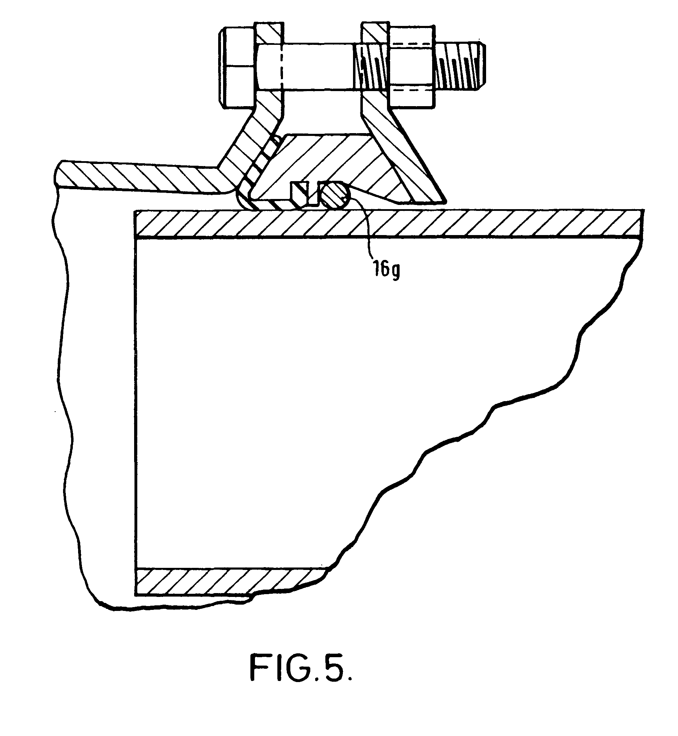

In Figure 5, the radially inner element 14 takes the form of an annular ring of generally circular cross section. The ring 14 constitutes an annular roller and the arrangement is such that upon axial movement of the radially outer element 14, as the sleeve and flange are drawn together, the relative sliding movement of the inclined surface of the annular recess over the roller causes the roller to deformed radially inwardly and into gripping or sealing contact with the pipe wall.

In each of the four embodiments described above, the enhanced gripping action on the pipe under the action of retractive end loads is brought about by relative axial movement between the radially inner element and the radially outer element leading to the radially inner element or a gripping surface thereof being urged into even firmer gripping contact with the pipe.

In the case of the embodiments of Figures 2, 3 and 5, the gripping action can be seen as arising through a wedging or camming action in which an inclined or bulbous portion of the surface of the annular recess rides along an inclined or curved surface of the radially inner element to force the radially inner element inwardly against the pipe or *vice versa.* The angles of inclination of the surfaces of the annular recess and/or the radially outer surface of the radially inner element, or the angles of inclinations of the tangents to those surfaces, can be made relatively shallow, for example around 15°. The shallowness of this angle, compared to the relative steepness of the angles of the compression surfaces on the flange and sleeve, and the complementary angles on the radially outer element, means that a firm gripping force can be applied to the pipe when only a relatively moderate compression force is applied by the sleeve and compression flange.

In order to provide a sealing action as well as a gripping action, a sealing gasket 20 is provided. Sealing gasket 20 has an inclined portion 20a which sits between the first compression surface 6 of the sleeve, and the inclined surface of the radially outer element; and a generally cylindrical portion 20b which sits between the radially outer element and the pipe. A short radially outwardly orientated lip 20c is retained within an annular slot in the radially outer element, thereby anchoring the gasket securely in place.

The compression surfaces 6 and 10 are coupled via flanges 22 and 24, which extend radially outwardly from the first and second compression surfaces respectively. Apertures around the circumference of each flange receive bolts 26 which connect the two flanges 22 and 24 together and are secured via nuts 28 in conventional fashion. The assembly of the compression surfaces 6 and 10, the flanges 22 and 24, the nuts 26 and bolts 28 form the means for drawing the annular compression member 12 and the annular sleeve 4 axially together so as to compress the radially outer element 14.

When the bolts 26 are tightened, the first and second compression surfaces 6 and 10 are drawn towards each other and, as a result, the radially outer element 14 is compressed between the two compression surfaces and forced radially inwardly so that a compressive seal is formed inwardly between the rubber sealing gasket 20, the pipe coupling device 2 and the pipe.

Furthermore, in response to the both the axial and radial component of the movement of the annular gripping means, a radially inner element 16 of the annular gripping means, which takes the form of a wedge in Figure 1, a cam in Figure 2, a lever in Figure 3, a roller in Figure 4, or a gripping ring in Figure 5, is moved radially inwardly and into gripping contact with the pipe. A row of teeth 30 assists the gripping action.

It will readily be apparent that numerous modifications and alterations could be made to the pipe coupling device illustrated in the accompanying drawings without departing from the principles underlying this invention.

## Claims

1. A pipe coupling device (2) comprising:
an annular sleeve (4) having an end configured to receive therein a plain end of a pipe and being provided with an annular first compression surface (6);
an annular compression member (12) having an annular second compression surface (10);
an annular gripping means (8); and
means (26, 28) for drawing the annular compression member (12) and the annular sleeve (4) axially together so as to compress the gripping means (8) between the first and second compression surfaces (6, 10) so as to deform or move the gripping means (8) radially inwardly and into gripping engagement with the pipe;
whereby the annular gripping means (8) comprises a radially outer element (14) comprising an array of circumferentially discontinuous interlinked members, the radially outer element (14) being configured to contract radially in response to a radially and/or axially compressive force, annular sealing means (20) interlocking with the radially outer gripping element (14) and disposed between a first surface of the radially outer element (14) and the first annular compression surface (6) and, in use, between a second surface of the radially outer element (14) and a radially outer surface of a pipe end received in the sleeve (4), **characterised in that** the annular gripping means (B) further comprises: a radially inner element (16) received within an annular recess in the radially outer element (14) the radially inner element (16) and a gripping surface (16a, 16c, 16e) of the radially inner element (16) being arranged for relative axial movement; the radially inner element (16) and radially outer element (14) being configured such that in response to axial outwards movement of the pipe, the gripping surface of the radially inner element (16a, 16c, 16e) is moved radially inwardly and into tighter gripping contact with the pipe.

2. A pipe coupling device (2) according to claim 1 wherein the radially inner element (16) and recess are configured such that in response to a radially inwards component of the movement of the radially outer element (14) as it is compressed, the radially inner element (16) is deformed or moved radially inwardly and into sealing and/or gripping contact with the pipe.

3. A pipe coupling device (2) according to any one of the preceding claims wherein the radially inner element (16) takes the form of an annular gripping ring, the gripping ring having a radially inner edge (16e) for gripping the pipe and a radially outer edge (16f) for engaging a wall of the annular recess (18) ; the arrangement being such that upon relative axial movement between the radially inner element (16) and the radially outer element (14), the radially inner edge (16e) of the gripping ring engages the pipe and further axial movement of the inner edge is substantially arrested, and the radially outer edge (16f) moves axially such that the gripping ring pivots about the radially inner edge and is forced into tighter gripping engagement with the pipe.

4. A pipe coupling device (2) according to any one of claims 1 to 3 wherein the radially inner element (16) takes the form of an annular wedge, the annular wedge having a radially inner surface (16a) for gripping the pipe and an inclined radially outer surface (16b) for engaging a portion of the wall of the annular recess; the arrangement being such that upon relative axial movement between the radially inner element (16) and the radially outer element (14), the radially inner surface of the annular wedge is urged towards the pipe and further axial movement of the inner surface (16a) is substantially arrested as the radially outer element wedges the radially inner surface (16a) of the annular wedge into tighter gripping arrangement with the pipe.

5. A pipe coupling device (2) according to claim 4 wherein the radially outer surface of the annular wedge (16b) has an angle of inclination of less than 45 degrees with respect to the axis of the pipe coupling device (2), preferably less than 30 degrees, for example less than 25 degrees, and in particular less than 20 degrees.

6. A pipe coupling device (2) according to claim 4 or claim 5 wherein the portion of the wall of the annular recess which engages the radially outer surface of the annular wedge (16b) is inclined.

7. A pipe coupling device (2) according to claim 6 wherein the inclined wall portion has an angle of inclination equal to the angle of inclination of the annular wedge.

8. A pipe coupling device (2) according to any one of claims 1 to 2 wherein the radially inner element (16) takes the form of an annular cam, either the surface of the annular recess being shaped to form a cam follower (17) and the radially inner element (16) being shaped to form a cam, or *vice versa*.

9. A pipe coupling device (2) according to claim 8 wherein the annular cam has a radially convex inner surface (16c) for gripping the pipe and a radially concave outer surface (16d) for engaging a wall of the annular recess, the annular cam (16) decreasing in cross-section in a direction towards the axially outer edge of the radially outer element; a portion of a surface of the annular recess constituting a cam follower (17), such that relative axial movement between the radially inner element (16) and the radially outer element (14) causes the cam follower portion (17) to cam along the concave outer surface of the annular cam (16) thereby rotating the annular cam and urging the convex inner surface (16c) thereof into gripping engagement with the pipe.

10. A pipe coupling device (2) according to claim 9 wherein the cam follower portion (17) of the annular recess takes the form of a bulbous or inwardly concave surface.

11. A pipe coupling device (2) according to any one of claims 1 to 2 wherein the radially inner element (16) takes the form of an annular roller, the arrangement being such that upon axial movement of the radially outer element (14), a radially outer surface (16g) of the annular roller engages a surface of the annular recess and is deformed radially inwardly and into griping/sealing contact with the pipe.

12. A pipe coupling device (2) according to any one of the preceding claims wherein one or both (and preferably both) of the first and second compression surfaces (6, 10) are inclined.

13. A pipe coupling device (2) according to any one of the preceding claims wherein one or both (and preferably both) axial ends of the radially outer element (14) of the annular gripping means are inclined, for example, at an angle or angles corresponding to the angle(s) of inclination of the compression surfaces (6, 10).

14. A pipe coupling device (2) according to claim 12 or claim 13 wherein the annular recess of the radially outer element (14) has a radially inclined surface, the angle of inclination of which, with respect to the pipe axis, being less than the smallest angle of inclination of the first or second compression surfaces (6, 10) or the angle(s) of inclination of the axial end or ends of the radially outer element (14) of the gripping means.

15. A pipe coupling device (2) according to any one of the preceding claims wherein the radially inner element (16) includes grip enhancing means (30) for enhancing the gripping contact with the pipe.

16. A pipe coupling device (2) according to claim 15 wherein the grip enhancing means (30) takes the form of a rough surface on the radially inner surface (16a, 16c, 16e) of the radially inner element (16), for example takes the form of gripping teeth.

17. A pipe coupling device (2) according to any one of the preceding claims wherein the radially outer element (14) comprises an annular array of circumferentially discontinuous slidably abutting members (14a).

18. A pipe joint comprising a combination of a pipe coupling device (2) as defined in any one of the preceding claims and a pipe.

19. A method for coupling the end of a pipe to a pipe coupling device (2), comprising the steps of:-
(a) placing an annular sleeve (4) of a pipe coupling device (2) as defined in any one of the preceding claims over the end of a pipe;
(b) drawing the annular compression member (12) and the annular sleeve (4) axially together so as to compress the gripping means (8) between the first and second compression surfaces (6, 10) so as to deform or move the gripping means (8) radially inwardly and into sealing and/or gripping engagement with the pipe.

20. An annular gripping means as described in any one of the preceding claims.

## Patentansprüche

1. Rohrkupplung (2) mit den folgenden Teilen:
einer Ringhülse (4) mit einem Ende, das so ausgebildet ist, dass darin ein glattes Ende eines Rohres einsetzbar ist und das mit einer ersten ringförmigen Kompressionsoberfläche (6) versehen ist;
einem ringförmigen Kompressionsorgan (12) mit einer ringförmigen zweiten Kompressionsoberfläche (10);
einem ringförmigen Spannglied (8); und
Mitteln (26, 28), um das ringförmige Kompressionsorgan (12) und die Ringhülse (4) axial zusammenzuziehen und **dadurch** das Spannglied (8) zwischen der ersten und zweiten Kompressionsoberfläche (6, 10) derart zu komprimieren, dass das Spannglied (8) radial nach innen und in Spannberührung mit dem Rohr gebracht wird;
wobei das ringförmige Spannglied (8) ein radial äußeres Element (14) aufweist, das eine Gruppe von in Umfangsrichtung diskontinuierlich verketteten Teilen aufweist und das radial äußere Element (14) so ausgebildet ist, dass es sich radial gemäß einer radialen und/oder axialen Kompressionskraft zusammenzieht und wobei ringförmige Dichtungsmittel (20) mit dem radial äußeren Spannelement (14) verkettet und zwischen einer ersten Oberfläche des radial äußeren Elementes (14) und der ersten ringförmigen Kompressionsoberfläche (6) angeordnet und im Betrieb zwischen einer zweiten Oberfläche des radial äußeren Elementes (14) und einer radial äußeren Oberfläche des Rohrendes in der Hülse (4) aufgenommen sind,
**dadurch gekennzeichnet, dass** das ringförmige Spannglied (8) weiter ein radial inneres Element (16) aufweist, das in einer Ringausnehmung in dem radial äußeren Element (14) angeordnet ist, wobei das radial innere Element (16) und die Spannoberfläche (16a, 16c, 16e) des radial inneren Elementes (16) in Axialrichtung relativ beweglich ist und das radial innere Element (16) und das radial äußere Element (14) derart ausgebildet sind, dass gemäß einer Auswärtsbewegung des Rohres die Spannoberfläche des radial inneren Elementes (16a, 16c, 16e) radial nach innen gedrückt wird und einen festeren Spannkontakt mit dem Rohr herstellt.

2. Rohrkupplung (2) nach Anspruch 1, bei welcher das radial innere Element (16) und die Ausnehmung derart gestaltet sind, dass gemäß einer radial nach innen gerichteten Komponente der Bewegung des radial äußeren Elementes (14) bei Kompression das radial innere Element (16) radial nach innen deformiert oder bewegt wird und in Dichtungsberührung und/oder Spannberührung mit dem Rohr gelangt.

3. Rohrkupplung (2) nach einem der vorhergehenden Ansprüche, bei welcher das radial innere Element (16) die Form eines kreisförmigen Spannringes hat und der Spannring einen radial inneren Rand (16e) zum Angreifen am Rohr und einen radial äußeren Rand (16f) besitzt, um an einer Wandung der Ringausnehmung (18) anzugreifen; wobei die Anordnung derart getroffen ist, dass gemäß einer relativen Axialbewegung zwischen dem radial inneren Element (16) und dem radial äußeren Element (14) der radial innere Rand (16e) und der Spannring am Rohr angreifen und eine weitere Axialbewegung des inneren Randes im Wesentlichen festgelegt wird und der radial äußere Rand (16f) sich axial derart bewegt, dass der Spannring um den radial inneren Rand verschwenkt wird und in einen festeren Spanneingriff mit dem Rohr gelangt.

4. Rohrkupplung (2) nach einem der Ansprüche 1 bis 3, bei welcher das radial innere Element (16) die Form eines Ringkeiles hat und der Ringkeil eine radial innere Oberfläche (16a) zum Angreifen am Rohr und eine geneigte radial äußere Oberfläche (16b) aufweist, um auf einen Teil der Wand der Ringausnehmung einzuwirken; wobei die Anordnung derart getroffen ist, dass bei einer relativen axialen Bewegung zwischen dem radial inneren Element (16) und dem radial äußeren Element (14) die radial innere Oberfläche des Ringkeiles auf das Rohr hin bewegt wird und eine weitere axiale Bewegung der inneren Oberfläche (16a) im Wesentlichen stillgesetzt wird, wenn das radial äußere Element durch Keilwirkung die radial innere Oberfläche (16a) des Ringkeiles in festeren Spanneingriff mit dem Rohr bringt.

5. Rohrkupplung (2) nach Anspruch 4, bei welcher die radial äußere Oberfläche des Ringkeiles (16b) einen Anstellwinkel von weniger als 45° gegenüber der Achse der Rohrkupplung (2) aufweist und vorzugsweise einen Winkel von weniger als 30°, beispielsweise einen Winkel von weniger als 25° und insbesondere einen Winkel von weniger als 20°.

6. Rohrkupplung (2) nach den Ansprüchen 4 oder 5, bei welcher ein Teil der Wand der Ringausnehmung, der an der radial äußeren Oberfläche des Ringkeiles (16b) angreift, geneigt ausgebildet ist.

7. Rohrkupplung (2) nach Anspruch 6, bei welcher der geneigte Wandabschnitt einen Anstellwinkel besitzt, der gleich dem Anstellwinkel des Ringkeiles ist.

8. Rohrkupplung (2) nach einem der Ansprüche 1 und 2, bei welcher das radial innere Element (16) die Form eines Ringnockens besitzt, wobei eine Oberfläche der Ringausnehmung so gestaltet ist, dass sie ein Nockenfolgeorgan (17) bildet und das radial innere Element (16) so gestaltet ist, dass es einen Nocken bildet oder umgekehrt.

9. Rohrkupplung (2) nach Anspruch 8, bei welcher der Ringnocken eine radial konvexe innere Oberfläche (16c) zum Angreifen am Rohr und eine radial konkave äußere Oberfläche (16d) zum Angreifen an einer Wand der ringförmigen Ausnehmung aufweist und der Ringnocken (16) im Querschnitt in einer Richtung nach dem axial äußeren Ende des radial äußeren Elementes abnimmt; wobei ein Abschitt der Oberfläche der ringförmigen Ausnehmung ein Nockenfolgeorgan (17) bildet derart, dass eine relative Axialbewegung zwischen dem radial inneren Element (16) und dem radial äußeren Element (14) bewirkt, dass das Nockenfolgeorgan (17) längs der konkaven äußeren Oberfläche des Ringnockens (16) entlangläuft und **dadurch** den Ringnocken dreht und die konvexe innere Oberfläche (16c) in Spanneingriff mit dem Rohr bringt.

10. Rohrkupplung (2) nach Anspruch 9, bei welcher der Nockenfolgeabschnitt (17) der ringförmigen Ausnehmung die Form einer kugelförmigen oder nach innen konkaven Oberfläche hat.

11. Rohrkupplung (2) nach einem der Ansprüche 1 und 2, bei welcher das radial innere Element (16) die Form eines kreisförmigen Torus aufweist, wobei die Anordnung derart getroffen ist, dass bei Axialbewegung des radial äußeren Elementes (14) eine radial äußere Oberfläche (16g) des Torus an einer Oberfläche der ringförmigen Ausnehmung angreift und radial nach innen deformiert und in Spannberührung und Dichtungsberührung mit dem Rohr gebracht wird.

12. Rohrkupplung (2) nach einem der vorhergehenden Ansprüche, bei welcher eine oder beide (und vorzugsweise beide) von erster und zweiter Kompressionsoberfläche (6, 10) geneigt ausgebildet ist.

13. Rohrkupplung (2) nach einem der vorhergehenden Ansprüche, bei welcher ein Axialende oder beide Axialenden (und vorzugsweise beide Axialenden) des radial äußeren Elementes (14) der ringförmigen Spannglieder beispielsweise unter einem Winkel oder unter Winkeln geneigt sind, die dem Anstellwinkel bzw. den Anstellwinkeln der Kompressionsoberflächen (6, 10) entsprechen.

14. Rohrkupplung (2) nach den Ansprüchen 12 oder 13, bei welcher die Ringausnehmung des radial äußeren Elementes (14) eine radial geneigte Oberfläche besitzt, wobei der Anstellwinkel gegenüber der Rohrachse kleiner ist als der kleinste Anstellwinkel der ersten oder zweiten Kompressionsoberfläche (6, 10) oder des Anstellwinkels oder der Anstellwinkel des Axialendes oder der Axialenden des radial äußeren Elementes (14) der Spannglieder.

15. Rohrkupplung (2) nach einem der vorhergehenden Ansprüche, bei welcher das radial innere Element (16) Spannerhöhungsmittel (30) aufweist, um den Spannkontakt mit dem Rohr zu erhöhen.

16. Rohrkupplung (2) nach Anspruch 15, bei welcher die Spannerhöhungsmittel (30) die Form einer rauen Oberfläche auf der radial inneren Oberfläche (16a, 16c, 16e) des radial inneren Elementes (16) besitzen und diese beispielsweise in Form von Spannzähnen ausgebildet sind.

17. Rohrkupplung (2) nach einem der vorhergehenden Ansprüche, bei welcher das radial äußere Element (14) eine ringförmig angeordnete Gruppe von in Umfangsrichtung diskontinuierlich angeordneten gleitbaren Stoßgliedem (14a) aufweist.

18. Rohrverbindung, bestehend aus einer Kombination einer Rohrkupplung (2) gemäß einem der vorhergehenden Ansprüche und einem Rohr.

19. Verfahren zur Kopplung des Endes eines Rohres mit einer Rohrkupplung (2) mit den folgenden Schritten:
(a) es wird eine Ringhülse (4) einer Rohrkupplung (2) gemäß einem der vorhergehenden Ansprüche über das Rohrende geschoben;
(b) es werden das ringförmige Kompressionsorgan (12) und die Ringhülse (4) axial derart gegeneinander gezogen, dass die Spannglieder (8) zwischen der ersten und zweiten Kompressionsoberfläche (6, 10) derart zusammengepresst werden, dass die Spannglieder (8) radial nach innen deformiert oder bewegt und in Dichtungseingriff und/oder Spanneingriff mit dem Rohr gebracht werden.

20. Ringförmige Spannglieder, wie in einem der vorhergehenden Ansprüche beschrieben.

## Revendications

1. Dispositif de raccord de tuyaux (2) comprenant :
un manchon annulaire (4) ayant une extrémité configurée pour recevoir à l'intérieur de celle-ci une extrémité lisse d'un tuyau et étant prévue avec une première surface de compression annulaire (6) ;
un élément de compression annulaire (12) ayant une seconde surface de compression annulaire (10) ;
des moyens d'ancrage annulaires (8) ; et
des moyens (26, 28) pour tirer l'élément de compression annulaire (12) et le manchon annulaire (4) axialement ensemble afin de comprimer les moyens d'ancrage (8) entre les première et seconde surfaces de compression (6, 10) afin de déformer ou de déplacer les moyens d'ancrage (8) radialement vers l'intérieur et en engagement d'ancrage avec le tuyau ;
moyennant quoi les moyens d'ancrage annulaires (8) comprennent un élément radialement externe (14) comprenant une série d'éléments interconnectés circonférentiellement discontinus, l'élément radialement externe (14) étant configuré pour se contracter radialement en réponse à une force de compression radiale et/ou axiale, des moyens d'étanchéité annulaires (20) s'emboîtant avec l'élément d'ancrage radialement externe (14) et disposés entre une première surface de l'élément radialement externe (14) et la première surface de compression annulaire (6) et, en utilisation, entre une seconde surface de l'élément radialement externe (14) et une surface:radialement externe d'une extrémité de tuyau reçue dans le manchon (4),
**caractérisé en ce que** les moyens d'ancrage annulaires (8) comprennent en outre un élément radialement interne (16) reçu dans un évidement annulaire dans l'élément radialement externe (14), l'élément radialement externe (16) et une surface d'ancrage (16a, 16c, 16e) de l'élément radialement interne (16) étant agencés pour le mouvement axial relatif ; l'élément radialement interne (16) et l'élément radialement externe (14) étant configurés de sorte qu'en réponse au mouvement axial vers l'extérieur du tuyau, la surface d'ancrage de l'élément radialement interne (16a, 16c, 16e) est déplacée radialement vers l'intérieur et en contact d'ancrage plus serré avec le tuyau.

2. Dispositif de raccord de tuyaux (2) selon la revendication 1, dans lequel l'élément radialement interne (16) et l'évidement sont configurés de sorte qu'en réponse à une composante radialement vers l'intérieur du mouvement de l'élément radialement externe (14) lorsqu'il est comprimé, l'élément radialement interne (16) est déformé ou déplacé radialement vers l'intérieur et en contact d'étanchéité et/ou d'ancrage avec le tuyau.

3. Dispositif de raccord de tuyaux (2) selon l'une quelconque des revendications précédentes, dans lequel l'élément radialement interne (16) prend la forme d'une bague d'ancrage annulaire, la bague d'ancrage ayant un bord radialement interne (16e) pour saisir le tuyau et un bord radialement externe (16f) pour s'engager avec une paroi de l'évidement annulaire (18) ; l'agencement étant tel que suite au mouvement axial relatif entre l'élément radialement interne (16) et l'élément radialement externe (14), le bord radialement interne (16e) de la bague d'ancrage met en prise le tuyau et un mouvement axial supplémentaire du bord interne est sensiblement arrêté, et le bord radialement externe (16f) se déplace axialement de sorte que la bague d'ancrage pivote autour du bord radialement interne et est contrainte à un engagement d'ancrage plus serré avec le tuyau.

4. Dispositif de raccord de tuyaux (2) selon l'une quelconque des revendications 1 à 3, dans lequel l'élément radialement interne (16) prend la forme d'un coin annulaire, le coin annulaire ayant une surface radialement interne (16a) pour saisir le tuyau et une surface inclinée radialement externe (16b) pour s'engager avec une partie de la paroi de l'évidemment annulaire ; l'agencement étant tel que suite au mouvement axial relatif entre l'élément radialement interne (16) et l'élément radialement externe (14), la surface radialement interne du coin annulaire est poussée vers le tuyau et le mouvement axial supplémentaire de la surface interne (16a) est sensiblement arrêté lorsque l'élément radialement externe bloque la surface radialement interne (16a) du coin annulaire en un agencement d'ancrage plus serré avec le tuyau.

5. Dispositif de raccord de tuyaux (2) selon la revendication 4, dans lequel la surface radialement externe du coin annulaire (16b) a un angle d'inclinaison inférieur à 45 degrés par rapport à l'axe du dispositif de raccord de tuyaux (2), de préférence inférieur à 30 degrés, par exemple inférieur à 25 degrés, et en particulier inférieur à 20 degrés.

6. Dispositif de raccord de tuyaux (2) selon la revendication 4 ou la revendication 5, dans lequel la partie de la paroi de l'évidement annulaire qui s'engage avec la surface radialement externe du coin annulaire (16b) est inclinée.

7. Dispositif de raccord de tuyaux (2) selon la revendication 6, dans lequel la partie de paroi inclinée a un angle d'inclinaison égal à l'angle d'inclinaison du coin annulaire.

8. Dispositif de raccord de tuyaux (2) selon l'une quelconque des revendications 1 à 2, dans lequel l'élément radialement interne (16) prend la forme d'une came annulaire, soit la surface de l'évidement annulaire est formée pour former un poussoir de came (17) et l'élément radialement interne (16) est formé pour former une came, ou vice versa.

9. Dispositif de raccord de tuyaux (2) selon la revendication 8, dans lequel la came annulaire a une surface interne radialement convexe (16c) pour saisir le tuyau et une surface externe radialement concave (16d) pour s'engager avec une paroi de l'évidement annulaire, la came annulaire (16) diminuant en section transversale dans une direction vers le bord axialement externe de l'élément radialement externe ; une partie d'une surface de l'évidement annulaire constituant un poussoir de came (17), de sorte que le mouvement axial entre l'élément radialement interne (16) et l'élément radialement externe (14) amène la partie formant poussoir de came (17) à se mettre en prise le long de la surface externe concave de la came annulaire (16) faisant ainsi tourner la came annulaire et poussant sa surface interne convexe (16c) à s'ancrer sur le tuyau.

10. Dispositif de raccord de tuyaux (2) selon la revendication 9, dans lequel la partie formant poussoir de came (17) de l'évidement annulaire prend la forme d'une surface concave vers l'intérieur ou bulbeuse.

11. Dispositif de raccord de tuyaux (2) selon l'une quelconque des revendications 1 à 2, dans lequel l'élément radialement interne (16) prend la forme d'un rouleau annulaire, l'agencement étant tel que suite au mouvement axial de l'élément radialement externe (14), une surface radialement externe (16g) du rouleau annulaire s'engage avec une surface de l'évidement annulaire et est déformée radialement vers l'intérieur et en contact d'ancrage/étanchéité avec le tuyau.

12. Dispositif de raccord de tuyaux (2) selon l'une quelconque des revendications précédentes, dans lequel une ou deux (et de préférence les deux) des première et seconde surfaces de compression (6, 10) sont inclinées.

13. Dispositif de raccord de tuyaux (2) selon l'une quelconque des revendications précédentes, dans lequel une ou deux (et de préférence les deux) extrémités axiales de l'élément radialement externe (14) des moyens d'ancrage annulaires sont inclinées, par exemple, selon un angle ou des angles correspondant à l'angle (aux angles) d'inclinaison des surfaces de compression (6, 10).

14. Dispositif de raccord de tuyaux (2) selon la revendication 12 ou la revendication 13, dans lequel l'évidement annulaire de l'élément radialement externe (14) a une surface radialement inclinée, dont l'angle d'inclinaison, par rapport à l'axe du tuyau, est inférieur au plus petit angle d'inclinaison des première ou seconde surfaces de compression (6, 10) ou l'angle (les angles) d'inclinaison de l'extrémité axiale ou des extrémités axiales de l'élément radialement externe (14) des moyens d'ancrage.

15. Dispositif de raccord de tuyaux (2) selon l'une quelconque des revendications précédentes, dans lequel l'élément radialement interne (16) comprend des moyens d'amélioration d'ancrage (30) pour améliorer le contact d'ancrage avec le tuyau.

16. Dispositif de raccord de tuyaux (2) selon la revendication 15, dans lequel les moyens d'amélioration de préhension (30) prennent la forme d'une surface rugueuse sur la surface radialement interne (16a, 16c, 16e) de l'élément radialement interne (16), par exemple ils prennent la forme de dents de préhension.

17. Dispositif de raccord de tuyaux (2) selon l'une quelconque des revendications précédentes, dans lequel l'élément radialement externe (14) comprend un réseau annulaire d'élément de butée coulissants (14a) circonférentiellement discontinus.

18. Assemblage de tuyaux comprenant une combinaison composée d'un dispositif de raccord de tuyaux (2) selon l'une quelconque des revendications précédentes et d'un tuyau.

19. Procédé permettant de raccorder l'extrémité d'un tuyau à un dispositif de raccord de tuyaux (2), comprenant les étapes consistant à :
(a) placer un manchon annulaire (4) d'un dispositif de raccord de tuyaux (2) selon l'une quelconque des revendications précédentes, sur l'extrémité d'un tuyau ;
(b) tirer l'élément de compression annulaire (12) et le manchon annulaire (4) axialement ensemble afin de comprimer les moyens de préhension (8) entre les première et seconde surfaces de compression (6, 10) afin de déformer ou de déplacer les moyens d'ancrage (8) radialement vers l'intérieur et en engagement étanche/ancré avec le tuyau.

20. Moyens d'ancrage annulaires selon l'une quelconque des revendications précédentes.
